# EUROPEAN PATENT APPLICATION

(11) **EP 1 491 107 A1**
(43) Date of publication of application: **29.12.2004**
(21) Application number: 04251076.8
(22) Date of filing: 26.02.2004
(51) Int. Cl.: A43B 9/12, B32B 27/12, C09J 7/04

(54) **Shoe upper having an adhesive impregnated fabric strip stitched thereto for sole attached thereto**

(30) Priority: 27.02.2003 US 375503
(71) Applicant: WORTHEN INDUSTRIES INC., Nashua, NH 03060 (US)
(72) Inventor: Strickland, Barbara, New Hampshire 03051 (US)
(74) Representative: Bankes, Stephen Charles Digby

(57) **Abstract**

A footwear construction (10) including an upper (12) to which a sole (18) is to be attached. The upper has a peripheral edge, having an inner surface and an outer surface. A heat activatable adhesive impregnated substrate strip (14) stitched to the outer surface of the peripheral edge whereby when the adhesive is activated a sole can be bonded thereto. A method for adhering an upper to a sole including applying a heat activatable adhesive to a substrate, attaching at least a portion of the upper and activating the adhesive.

## Description

### Field of the Invention

The invention relates to a footwear upper construction to which a sole is attached.

### Background of the Invention

In the manufacture of footwear, several steps in the process require that surfaces be bound together by adhesives. Once the surfaces are adhered they may or may not be stitched depending upon the specific footwear construction. Typically, solvent-based adhesives are used for the adhesive applications. The surfaces that are adhered together are often conditioned such as by priming, washing, roughening, etc. in order to ensure a good adhesive bond.

A component in footwear construction is the sole of the footwear. For certain types of footwear the soles are molded and after molding they are adhesively secured to an upper. The unit soles are usually injection molded from thermoplastic materials, including urethanes, polyvinyl chlorides, block copolymers, thermoplasic rubbers, polyolefins, etcetera.

The surface of the molded sole where the adhesives will be applied are cleaned and may be abraded for enhanced bonding. Adhesive application machines apply a ribbon of adhesive to the periphery of the sole. To ensure proper bonding, an adhesive primer strip and/or primer is placed on the sole.

The facing surface of the upper has an adhesive applied thereto. The adhesive surface of the upper is then put into contacting engagement with the adhesive on the sole and pressure applied to insure a good adhesive bond.

Whether the upper is a woven or non-woven material, to effect the proper bond, the opposed surfaces of the upper and the sole must first be coated with adhesive and/or primer because often an adhesive per se does not properly penetrate the upper. Loose weaves and less dense weaves often require two coats of adhesives for adequate lay-up. Whether solvent based or aqueous based, the adhesive requires time to dry.

### Brief Summary of the Invention

The present invention eliminates the dual priming/adhesive applications of the prior art uppers/soles and minimizes the time to bond an upper to a sole.

Broadly, the invention comprises an upper footwear construction. The upper has a peripheral edge. A substrate is coated with an adhesive and the substrate is stitched to the edge of the upper such that the coated substrate will contact the adhesive/primer on the sole to which the upper is to be attached. The adhesive may be applied to the substrate by various methods, including extrusion; laminating a film; spray, roll coating or brushing a liquid or hot melt system; etcetera.

In the preferred embodiment of the invention, heat activated adhesive systems are used. The substrate material can be woven or non-woven. A heat activatable adhesive impregnated substrate is stitched to the outer surface of the peripheral edge of the upper whereby when the adhesive is activated a sole can be bonded thereto.

The adhesive properties are the same or better than prior art adhesives. Neither the application process nor the chemical nature of the adhesive is critical. For the adhesive, various adhesives are selected such that they possess at least the following characteristic - an adhesive which has an affinity for the surface which is greater than the cohesive force of the adhesive layer such that the adhesive bond will not break but rather the substrate will tear.

Further, for the adhesive to be suitable for its use in bonding the outer sole to the upper in addition to causing substrate tearing bonds when forcefully pulled apart, it preferably must meet or exceed the following performance tests:
1. Reactivate at 115°-125°F.
2. Have enough initial tack or grab to adhere
   the sole to the upper without slipping, prior
   to fully pressing.
3. Bond to the upper permanently within 8 seconds
   under pressure of between about 40 to 80 psig.
4. Pass standard heat and water resistance tests
   (140°F/95% R.H., and 48 hour water soak).
5. Be impervious to oil and plasticizer migration; and
6. Pass 100,000 flex cycles without opening.

These performance tests are set forth in the published standards of SATRA (Shoe & Allied Trade Research Association) standards for sole-attaching adhesives, specifically SATRA TM409, Hear resistance/heat aging of sole bonds in complete footwear; SATRA TM92, Resistance to Footwear Flexing; and SATRA TM411 Peel strength of footwear sole bonds.

### Brief Description of the Drawings

Fig. 1 is a side view of an upper to which a substrate is stitched; and
Fig. 2 is a section view of Fig. 1 taken along lines 2-2 of Fig. 1.

### Description of the Preferred Embodiment(s)

The following chart sets forth exemplary combinations of sole material/sole adhesive or primer/substrate material/substrate adhesive/upper material believed suitable for purposes of the invention.

| Sole Material | Sole Adhesive or Primer | Substrate Material | Substrate Adhesive | Upper Material |
|---|---|---|---|---|
| Polyurethane (Bayer or Huntsman) | Upaco 3704 methyl ethyl ketone wash Upaco 2448 polyurethane adhesive | 76g/m² Spun Bond Polyester/non-woven | Upaco 2448 polyurethane adhesive 2 coats | Leather or suede |
| SBS, Thermoplastic rubbers | Upaco 3213 chlorination rubber primer Upaco 2448 polyurethane adhesive | 250-300 denier Nylon/polyester woven fabric | Upaco 3275 nylon primer Upaco 2448 polyurethane adhesive | Leather or suede |
| EVA or EVA blends (Usually imported) | Upaco 3217 ethylene vinyl acetate primer Upaco 2448 polyurethane adhesive | 250-275 denier Nylon/Polyester woven fabric | Upaco 3275 nylon primer/2448 Nylon primer/polyureth ane adhesive | Synthetic "leather" PU or PVC coated |

Obviously, the adhesive of choice is based upon the composition of the sole to which the upper (substrate) is to be attached and the composition of the adhesive on the substrate.

Preferably the adhesive for the substrate is a urethane based adhesive and particularly a urethane adhesive having a polycaprolactone backbone. An exemplary adhesive would be UPACO 2448, Upaco Adhesives, Inc. a division of Worthen Industries, Inc., Nashua New Hampshire. This adhesive is a thermoplastic polyurethane cast from solvent. This adhesive is especially suitable for bonding blown polyester/polyurethane or SBS, thermoplastic rubber soles.

Preferably the substrate material is a polyester nonwoven, impregnated with the compounded polyurethane adhesive.

In the preferred embodiment the heat activatable adhesive impregnated in the substrate bonds both to the sole and to the upper. However, depending upon the specific upper material and substrate material used together with the stitch used, it may not be necessary that the heat activatable adhesive in the substrate bond to the upper as long as the performance standards set forth previously are met to determine the suitability of the final bond for its intended purpose.

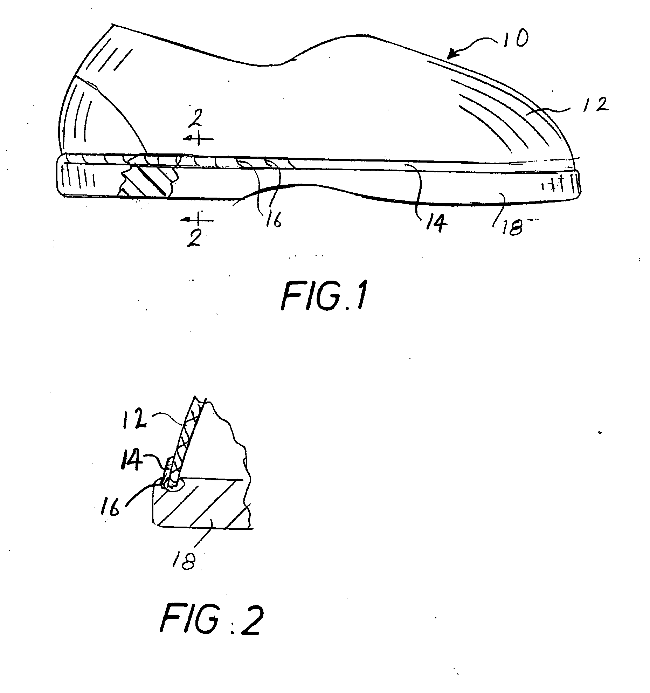

Referring to Figs. 1 and 2, an upper assembly is shown generally at 10 and comprises an upper 12, a substrate 14 which is stitched to the upper, such as bv a Strobel stitch, 16. The substrate 14 is in turn bonded to a sole 18.

Although a Stobel stitch is illustrated in the figure, a Korbel stitch or any stitch which will not fail when tested according to the above standards can be used.

## Claims

1. A footwear construction (10) which comprises:
an upper (12) to which a sole (18) is to be attached, the upper having a peripheral edge, the edge having an inner surface and an outer surface; and
a heat activatable adhesive impregnated substrate strip (14) stitched to the outer surface of the peripheral edge whereby when the adhesive is activated a sole can be bonded thereto.

2. The footwear construction of claim 1 wherein:
the heat activatable adhesive is selected from polyester or polycaprolactone-based urethane polymers in the molecular weight range of 80,000-160,000.

3. The footwear construction of claim 1 or claim 2 wherein:
the substrate strip material (14) is selected from polyester non-wovens, polyester/nylon non-wovens; polyester/olefin non-wovens; polyester, cotton or nylon fabrics.

4. The footwear construction of any preceding claim wherein:
the upper (12) is leather or synthetic coated upper fabrics.

5. The footwear construction of claim 4 wherein:
the stitch (16) is a bonus stitch.

6. The footwear construction of any one of claims 1 to 4 wherein:
the stitch (16) is a strobel stitch.

7. The footwear construction of any preceding claim which comprises:
a sole (18) bonded to the substrate material.

8. The footwear construction of claim 7 wherein:
the sole (18) is **characterized by** a film of adhesive on its periphery.

9. The footwear construction of claim 8 wherein:
the film of adhesive is selected from polyester or polycaprolactone-based polyurethanes.

10. The footwear construction of any one of claims 7 to 9 wherein:
the sole material is selected from polyurethane, SBS rubber, EVA (ethylene vinyl acetate), EVA blends, or leather.

11. A method for adhering an upper (12) to a sole (18) comprising the steps of:
applying a heat activatable adhesive to a substrate (14) ;
attaching at least a portion of the substrate to at least a portion of the upper (12) to form an attached substrate;
activating the adhesive; and
contacting the attached substrate (14) with the sole.

12. The method according to claim 11 wherein the attaching step comprises stitching.

13. The method according to claim 12 wherein the upper (12) has a peripheral edge and which further comprises:
stitching the substrate (14) to the peripheral edge.

14. The method according to claim 13 wherein the applying step comprises impregnating.

15. The method according to any one of claims 11 to 14 wherein the heat activatable adhesive meets or exceeds the SATRA TM409 standard.

16. The method according to any one of claims 11 to 15 wherein the heat activatable adhesive is selected from polyester or polycaprolactone-based urethane polymers in the molecular weight range of 80,000-160,000.

17. The method according to any one of claims 11 to 16 wherein the substrate is selected from polyester non-wovens, polyester/nylon non-wovens; polyester/polyolefin non-wovens; polyester, cotton or nylon fabrics.

18. The method according to any one of claims 11 to 17 wherein the upper comprises leather or synthetic coated upper fabrics.

19. The method according to any one of claims 11 to 18 wherein the sole is selected from polyurethane, SBS rubber, ethylene vinyl acetate, or leather.

20. The method according to any one of claims 11 to 19 wherein the sole is primed or coated with an adhesive.

21. A method for adhering an upper (12) having a peripheral edge to a sole (18), the sole having a primer or adhesive coated thereon, comprising the steps of:
impregnating a heat activatable polyurethane adhesive into a polyester/olefin non-woven, the adhesive meeting or exceeding the SATRA TM409 standard;
stitching at least a portion of the non-woven to the peripheral edge to form a stitched non-woven;
activating the adhesive; and
contacting the attached non-woven with the sole (18).
